# EUROPEAN PATENT APPLICATION

(11) **EP 2 043 106 A1**
(43) Date of publication of application: **01.04.2009**
(21) Application number: 07790974.5
(22) Date of filing: 19.07.2007
(51) Int. Cl.: G21C 19/46, B01J 23/42, B01J 31/28, C01G 43/00

(54) **METHOD OF REDUCING HEXAVALENT URANIUM BY ULTRASONIC PROPAGATION**

(30) Priority: 19.07.2006 JP 2006196748
(71) Applicant: Japan Atomic Energy Agency, Naka-gun, Ibaraki 319-1184 (JP)
(72) Inventor: TORAISHI, Takashi, Ibaraki 319-1195 (JP); KIMURA, Takaumi, Ibaraki 319-1195 (JP); ARISAKA, Makoto, Ibaraki 319-1195 (JP)
(74) Representative: Domenego, Bertrand
(86) International application number: PCT/JP2007/064220
(87) International publication number: WO 2008/010538

(57) **Abstract**

Conventionally, the bulk of an aqueous solution of Pt(IV) ions to which 2-propanol has been added in a small amount is irradiated with ultrasound to reduce the Pt(IV) ions to metallic Pt but with this simple addition of 2-propanol, ultrasound irradiation cannot afford sufficient power to reduce U(VI) to U(IV).

By utilizing a solid noble metal catalyst, the present invention increases the reducing power afforded by ultrasound irradiation to such an extent as to achieve the reduction of U(VI) in an aqueous solution to U(IV).

## Description

### TECHNICAL FIELD

The present invention relates to a method of adjusting the valency of uranium in the spent nuclear fuel reprocessing system and doing so with the aid of external ultrasound irradiation.

### BACKGROUND ART

The present invention aims at reducing U(VI) to U(IV) in an aqueous solution. In the current PUREX nuclear fuel reprocessing system, Pu(IV) is reduced to Pu(III) by external addition of U(IV) which is then separated from the plutonium. To produce the additive U(IV), an aqueous solution of stable U(VI) is reduced by introducing hydrogen gas; however, the explosiveness of hydrogen gas and its capability of embrittling the metal materials used in structural components has posed a problem in the spent nuclear fuel reprocessing system that requires a high degree of safety.

On a laboratory scale, U(VI) may be reduced by adding a metal such as zinc but this method is difficult to apply to nuclear fuel reprocessing because after reduction is effected, metal ions are left in solution as an element that interferes with the reprocessing scheme.

A technique is known for reducing metal ions in an aqueous solution by making use of the reducing power afforded by ultrasound irradiation and an example is the method proposed by Caruso et al. in which Pt(IV) ions are reduced to metallic Pt.
Non-Patent Document 1: Colloids and Surfaces A, 169 (2000), 219

### DISCLOSURE OF THE INVENTION

### PROBLEMS TO BE SOLVED BY THE INVENTION

In the present invention, the reducing power obtained by external ultrasound irradiation is utilized to reduce U(VI) in an aqueous solution to U(IV). The present invention provides a technique that enables the intended reduction without using an explosive gas such as hydrogen gas and without causing any residual metal to be left in solution unlike in the above-mentioned conventional method that relies on the addition of metals.

As an example of the technique for reducing metal ions in an aqueous solution by making use of the reducing power afforded by ultrasound irradiation, the above-mentioned Non-Patent Document 1 is known. In this technique, the bulk of an aqueous solution of Pt(IV) ions to which 2-propanol has been added in a small amount is irradiated with ultrasound to reduce the Pt(IV) ions to metallic Pt; however, with this simple addition of 2-propanol, ultrasound irradiation cannot afford sufficient power to reduce U(VI) to U(IV).

By utilizing a solid noble metal catalyst, the present invention increases the reducing power afforded by ultrasound irradiation to such an extent as to achieve the reduction of U(VI) in an aqueous solution to U(IV).

### MEANS TO SOLVE THE PROBLEMS

The present invention comprises adding a specific solid noble metal catalyst to a U(VI) containing aqueous solution and applying external ultrasound irradiation, whereby the reducing power of ultrasound irradiation is increased to enable the reduction of U(VI) to U(IV).

### EFFECTS OF THE INVENTION

The present invention has the outstanding feature of enabling the reduction of U(VI) without using any explosive gas but solely by external ultrasound irradiation. Since it does not use the explosive hydrogen gas, the present invention is a technique that is highly adapted for application to the spent nuclear fuel reprocessing plant that requires a high degree of safety. As another outstanding advantage, the present invention which makes use of external ultrasound irradiation is suitable for use as a remote control technique in nuclear fuel reprocessing that involves the problem with radiation emission.

As a further advantage, the present invention has no need to add a metal into a solution as in the conventional method that relies on the addition of metals, so it provides a process that enables spent nuclear fuels to be reprocessed without waste production.

The solid noble metal that is added as a catalyst can be recovered and recycled intact, the generation of U(IV) proceeds without initial addition of 2-propanol, and even if 2-propnaol is added in order to promote the reaction, the added 2-propnaol can also be recovered and recycled by heating or introducing dry air; because of these outstanding features, the present invention provides a process that enables spent nuclear fuels to be reprocessed without waste production.

### BRIEF DESCRIPTION OF THE DRAWINGS

[FIG. 1] FIG. 1 is a schematic diagram of the apparatus used in Examples 1 and 2.
[FIG. 2] FIG. 2 is a diagram showing the visible absorption spectra obtained in Example 1.
[FIG. 3] FIG. 3 is a diagram showing the time evolution of the yield of U(IV) obtained in Example 2.
[FIG. 4] FIG. 4 is a diagram showing the time evolution of the yield of U(IV) obtained in Example 3.

### LEGEND

1: water tank
2: ultrasound emitter
3: U(VI) containing solution
4: Pt black catalyst
5: Ar gas scrubbed with 2-propnaol

### BEST MODE FOR CARRYING OUT THE INVENTION

In the present invention, a Pt black catalyst, a Pt catalyst, a Pd black catalyst, a Pd catalyst or the like may be used as the aforementioned specific solid noble metal catalyst.

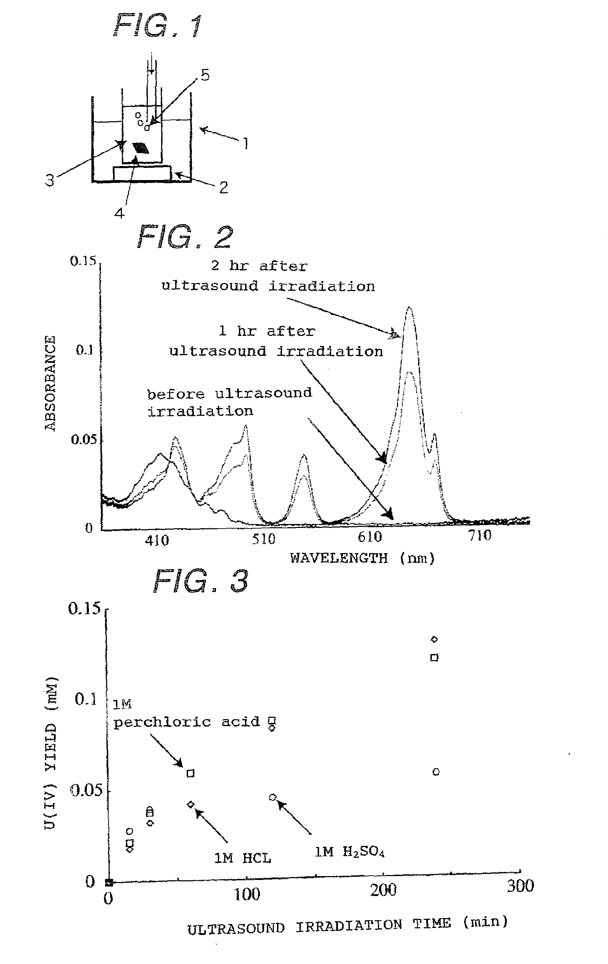

FIG. 1 is a schematic diagram of the apparatus used in all of the examples that follow: numeral 1 signifies a water tank, 2 is an ultrasound emitter, 3 is a U(VI) containing solution, 4 is a Pt black catalyst, and 5 is Ar gas scrubbed with 2-propnaol. The ultrasound emitter 2 is placed on the bottom of the water tank 1 and on top of that emitter, a vessel holding the U(VI) containing solution 3 in the presence of the added catalyst 4 is placed. The solution was bubbled with the 2-propanol scrubbed Ar gas 5. With this experimental set-up, Ar gas was introduced into the solution for bubbling while it was irradiated with ultrasound from the emitter so that U(VI) in the solution was reduced to U(IV).
Hereinafter, the present invention is described with reference to examples.

### EXAMPLES

### (Example 1)

A 5-mM portion of uranyl perchlorate [U(VI)] was dissolved in a 1M HCl solution and 20 vol% of 2-propanol was then added; to the resulting solution, the Pt black catalyst was added and a 600 kHz ultrasound was externally applied under bubbling with the 2-propanol scrubbed Ar gas. After the passage of specified hours, the visible absorption spectrum of the solution was measured and the reduction of U(VI) to U(IV) was verified from the characteristic 648 nm absorption of U(IV). FIG. 2 shows the visible absorption spectra after the passage of the respective hours.

Example 1 shows that external ultrasound irradiation enabled the reduction of U(VI) to U(IV). To be more specific, there was no characteristic 648 nm absorption of U(IV) before the ultrasound irradiation but after 1-hr and 2-hr irradiations, the characteristic 648 nm absorption of U(IV) was found.

### (Example 2)

A 5-mM portion of uranyl perchlorate [U(VI)] was dissolved in each of a 1M HCl solution, a 1M H₂SO₄ solution and a 1M perchloric acid solution and 20 vol% of 2-propanol was added; to the resulting solutions, the Pt black catalyst was added and a 600 kHz ultrasound was externally applied under bubbling with the 2-propanol scrubbed Ar gas. After the passage of specified minutes, the visible absorption spectra of the solutions were measured and the reduction of U(VI) to U(IV) was verified from the characteristic 648 nm absorption of U(IV). FIG. 3 shows the yield of U(IV) that was generated after the passage of the respective minutes.

Example 2 shows that the reduction of U(VI) to U(IV) by external ultrasound irradiation is possible in solutions of various solutes such as HCl, H₂SO₄, and perchloric acid.

### (Example 3)

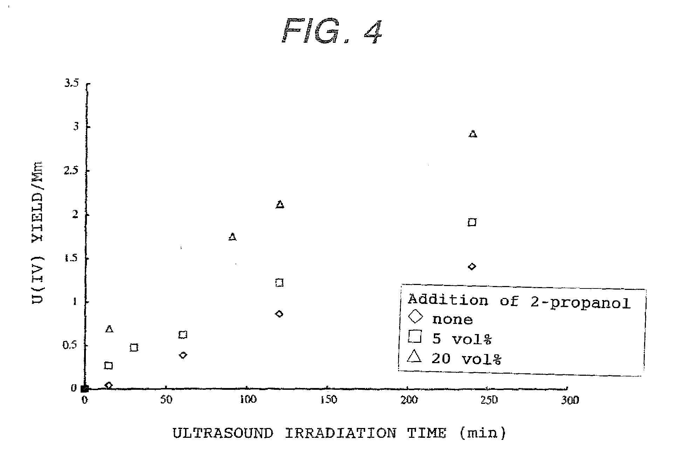

A 5-mM portion of uranyl perchlorate [U(VI)] was dissolved in a 1M HCl solution; three samples were prepared from the resulting solution, one of which had no 2-propanol added to it, and the remaining two samples had 2-propanol added in respective amounts of 5 vol% and 20 vol%; to the resulting solutions, a 600 kHz ultrasound was externally applied under bubbling with the 2-propanol scrubbed Ar gas. After the passage of specified minutes, the visible absorption spectra of the solutions were measured and the reduction of U(VI) to U(IV) was verified from the characteristic 648 nm absorption of U(IV). FIG. 4 shows the yield of U(IV) that was generated after the passage of the respective minutes.

Example 3 shows that the reduction of U(VI) to U(IV) proceeds without initial addition of 2-propanol and that the initial addition of 2-propanol promotes the reaction.

### INDUSTRIAL APPLICABILITY

The present invention can be utilized in such applications as adjustment of the valency of uranium in the spent nuclear fuel reprocessing system.

## Claims

1. A method of reducing U(VI) in an aqueous solution by external ultrasound irradiation using a solid noble metal catalyst.

2. The method according to claim 1, which comprises adding the solid noble metal catalyst to the U(VI) containing aqueous solution and irradiating the same aqueous solution with ultrasound so that U(VI) is reduced to U(IV).

3. The method according to claim 1 or 2, wherein the aqueous solution is one of hydrochloric acid, perchloric acid, nitric acid, or sulfuric acid, the solid catalyst is a platinum black catalyst, a platinum catalyst, a palladium catalyst, or a palladium black catalyst, and the ultrasound has a frequency of 20 kHz to 2 GHz, preferably 200 to 600 kHz, and most preferably 600 kHz.

4. The method according to any one of claims 1-3, wherein 2-propanol is added to the U(VI) containing aqueous solution to promote the reduction of U(VI).
